# EUROPEAN PATENT SPECIFICATION

(11) **EP 4 505 911 B1**
(45) Date of publication and mention of the grant of the patent: **28.10.2026**
(21) Application number: 24187875.0
(22) Date of filing: 10.07.2024
(51) Int. Cl.: A47G 21/14, A47J 47/16

(54) **MODULAR CULINARY IMPLEMENT STORAGE SYSTEM**
MODULARES LAGERUNGSSYSTEM FÜR KÜCHENGERÄT
SYSTÈME DE STOCKAGE D'INSTRUMENT CULINAIRE MODULAIRE

(30) Priority: 10.08.2023 US 202318232809
(43) Date of publication of application: 12.02.2025
(73) Proprietor: Caraway Home, Inc., New York, NY 10001 (US)
(72) Inventor: NATHAN, Jordan, New York, 10001 (US); RECOR, Bret, San Francisco, 94103 (US); ANDREJCIC, Christoph, San Francisco, 94103 (US); AHN, Sehee, San Francisco, 94103 (US); YOUNG, Kenneth, San Francisco, 94103 (US); GROSS, Benjamin, San Francisco, 94103 (US)
(74) Representative: IK-IP LTD

(56) References cited:
- CN-U- 212 099 862
- CN-U- 217 987 407
- GB-A- 2 558 855
- US-A- 5 361 915
- US-A- 5 850 784

## Description

### FIELD OF THE INVENTION

The present invention is directed to a modular culinary implement storage system. More specifically, the present invention is directed to a modular culinary implement storage system facilitating economical utilization of space and improved storage capabilities.

### INTRODUCTION

Contemporary kitchens often include a plethora of apparatuses ("cooking implements") used for the preparation of cooked goods. Due to the variety of cooking implements utilized in the preparation of cooked goods, ensuring said implements are easily accessible is of paramount importance.

Resulting from the ceaseless usage of cooking implements in a person's everyday life, the varied layouts of kitchens in different homes, and the need for easily accessible cooking implements, a variety of cooking implement storage systems have been attempted.

CN212099862U discloses a storage device for kitchen utensils that comprises at least two storage components, each of which includes a main body and at least one partition structure provided in the main body.

Conventional cooking implement storage systems attempt to store implements in a manner that increases accessibility and decreases required space. In situations where kitchen space is limited, such as apartments in urban environments, economical utilization of kitchen space is particularly desirable. However, even with the reduction in space, conventional cooking implement storage systems are seldom efficient. Traditionally, cooking implement storage systems are a cylindrical shaped bucket, or a drawer where cooking implements are haphazardly grouped together. Furthermore, the incongruous shapes of various cooking implements thrown into a bucket or placed in a drawer, forces cooks to waste time searching for a specific implement while cooking. Essentially, traditional storage systems in conjunction with the incongruity of cooking implements, has forced cooks to economize their kitchens at the expense of maximizing efficiency.

Additionally, the segregation of cooking implements exacerbated by traditional storage systems has further increased inefficiency in the kitchen. For example, a cook must grab a knife from a countertop knife block to chop vegetables, and then retrieve a spoon from a drawer to stir ingredients cooking in a pot. The separation of various cooking implements has engendered increased inefficiency for cooks in the kitchen.

Thus, it would be desirable to provide systems and devices that maximize both the economy of space and efficiency in the kitchen. It would be further desirable to provide systems and devices allowing cooks to customize the arrangement of storage systems to best suit their needs.

Systems and devices for storing cooking implements that are modular, customizable, efficient, and modest in scale, in order to be adapted to various kitchen sizes and countertop arrangements, prove advantageous to cooks over the employment of traditional storage systems.

Therefore, systems and devices incorporating such advantageous features are hereby provided.

### SUMMARY

The present invention provides the modular culinary storage system of independent claim 1. The dependent claims specify preferred but optional features.

This Summary is provided to introduce a selection of concepts in a simplified form that are further described below in the Detailed Description. This Summary is not intended to identify key features or essential features, nor is it intended to limit the scope of the claims included herewith.

Provided may be a modular culinary storage system comprising: a tray; a utensil bucket; a utensil block comprising: a utensil block top surface comprising a plurality of utensil block top surface apertures, and a plurality of utensil block storage compartments, each of the plurality of utensil block storage compartments bound by at least one of the plurality of utensil block top surface apertures; and a knife block comprising: a first front end member comprising a first front end member top surface notch; a second front end member, comprising a second front end member top surface notch, the first front end member top surface notch and the second front end member top surface notch defining a front end aperture; a plurality of elongated members; a back-end member; and a plurality of dividers disposed between at least one of the first front end member, the second front end member, the plurality of elongated members, and the back-end member; the tray, configured to house at least one of the utensil bucket, the utensil block, and the knife block; and the utensil bucket, configured to house at least one of the utensil block and the knife block.

In an embodiment, the tray further comprises one or more magnetic tray members. In a further embodiment, the utensil bucket further comprises one or more magnetic utensil bucket members. In another embodiment, the utensil block further comprises one or more magnetic utensil block members. In yet a further embodiment, the knife block further comprises one or more magnetic knife block members.

In an embodiment, each of the plurality of dividers comprise a divider base; a divider front wall orthogonal to the divider base; and a divider back wall orthogonal to the divider base. The divider front wall may be shorter than the divider back wall.

In an embodiment, the utensil block further comprises a plurality of utensil block storage compartments, each of the plurality of utensil block storage compartments bound by one of a utensil block bottom surface apertures and one of the utensil block top surface apertures. The tray may further comprise a foot not traversing the entirety of the tray.

In an embodiment, the plurality of dividers define a plurality of knife block compartments.

In an embodiment, each of the plurality of knife block compartments further comprises at least one knife block compartment opening, wherein each of the at least one knife block compartment openings is of a lesser area than the front end aperture. The utensil bucket may be sized to accept the utensil block, and the utensil block may be configurable in a plurality of configurations within utensil bucket. The plurality of configurations may comprise a first configuration and a second configuration, wherein the utensil bucket may comprise a bucket front wall, a bucket back wall, a bucket first wall, and a bucket second wall, in the first configuration, the utensil block may interface only with the bucket front wall, the bucket back wall, and the bucket first wall, and, in the second configuration, the utensil block may interface only with the bucket front wall, the bucket back wall, and the bucket second wall. The plurality of configurations may further comprise a third configuration, and, in the third configuration, the utensil block may interface only with the bucket front wall and the bucket back wall.

Each of the plurality of utensil block top surface apertures may be oblong, wherein the utensil bucket may comprise a utensil bucket sidewall, and each of the plurality of utensil block top surface apertures may be disposed nonorthogonal to the utensil bucket sidewall. In an embodiment, the utensil block comprises a utensil block side wall, and wherein the utensil bucket sidewall and the utensil block sidewall comprise complementary curvature.

### BRIEF DESCRIPTION OF THE DRAWINGS

The incorporated drawings, which are incorporated in and constitute a part of this specification exemplify the aspects of the present disclosure and, together with the description, explain and illustrate principles of this disclosure.
FIG. 1 is an illustration of an embodiment of the culinary implement storage system.
FIG. 2A is an illustration of an embodiment of the tray base top surface.
FIG. 2B is an illustration of an embodiment of the tray base bottom surface.
FIG. 3 is an illustration of an embodiment of the utensil bucket.
FIG. 4 is an illustration of an embodiment of the utensil block.
FIG. 5 is an illustration of an embodiment of the knife block
FIG. 6 is an illustration of an embodiment of the knife block and the plurality of dividers thereof.

### DETAILED DESCRIPTION

In the following detailed description, reference will be made to the accompanying drawing(s), in which identical functional elements are designated with like numerals. The aforementioned accompanying drawings show by way of illustration, and not by way of limitation, specific aspects, and implementations consistent with principles of this disclosure. These implementations are described in sufficient detail to enable those skilled in the art to practice the disclosure and it is to be understood that other implementations may be utilized and that structural changes and/or substitutions of various elements may be made without departing from the scope and spirit of this disclosure. The following detailed description is, therefore, not to be construed in a limited sense.

It is noted that description herein is not intended as an extensive overview, and as such, concepts may be simplified in the interests of clarity and brevity.

All documents mentioned in this application are hereby incorporated by reference in their entirety. Any process described in this application may be performed in any order and may omit any of the steps in the process. Processes may also be combined with other processes or steps of other processes.

Disclosed herein are systems and devices for culinary utensil storage (the "system"). In an embodiment, the system provides a space-saving benefit. In another embodiment, the system provides a customizable solution for storing various culinary implements. Further disclosed is a novel system and device that avoids the need for haphazard culinary implement storage, which is inefficient, time consuming, and leads to frustration. Additionally, such a system may increase the aesthetic appearance of a kitchen.

In an embodiment, the invention of the present disclosure is a modular culinary implement storage system (the "storage system"). The storage system may be configured to store a cook's culinary implements without the need for indiscriminate placement of said implements in a drawer.

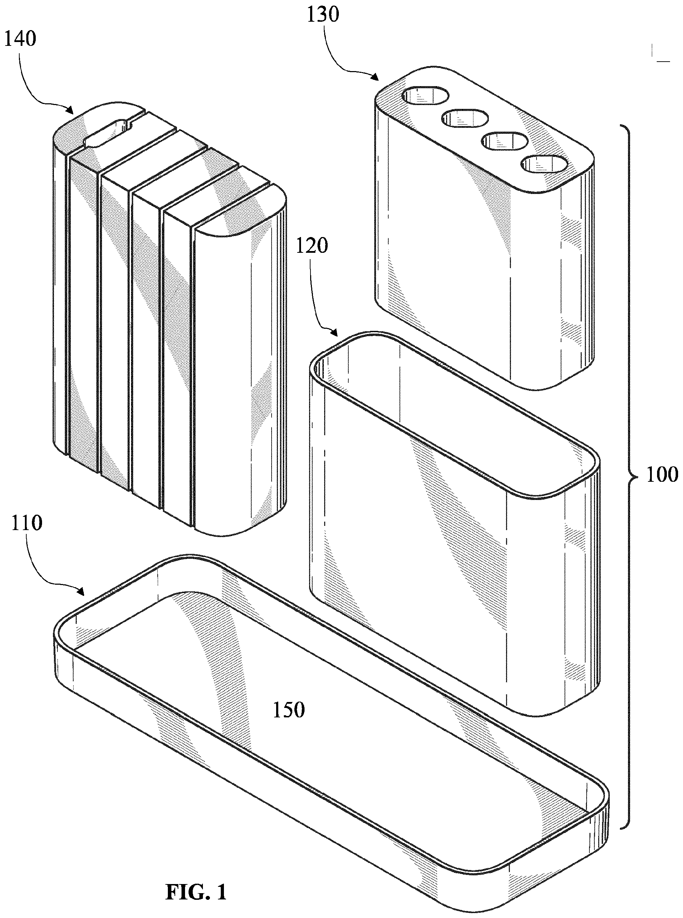

Referring to FIG. 1, the storage system comprises a plurality of components, wherein said components may be at least one of a tray **110,** a utensil bucket **120,** a utensil block **130,** and a knife block **140.** Said components may be modular, wherein the modularity allows for the cook to customize the storage system into a plurality of configurations. In an embodiment, the plurality of configurations may provide increased cooking efficiency. In another embodiment, the plurality of configurations may allow for the cook to reduce needed storage space. As a non-limiting example, the storage system and components thereof (e.g., tray **110,** utensil bucket **120,** utensil block **130,** and knife block **140**) may be readily convertible to various configurations. Accordingly, the storage system may be adapted such that a user may modify the configuration ad hoc.

The components of the storage system may be modular in the sense that there are a number of components (e.g., tray **110,** utensil bucket **120,** utensil block **130,** and knife block **140**) that may be used in conjunction with one another or may be utilized separately. In one configuration, the knife block **140** may stand alone or may be laid flat in a drawer or other receptacle. As described in more detail below, the vertical cuts on the knife block **140** may be sized such that the knife block **140** may be laid in a drawer flat and the knives may be extracted in such a position. In one configuration, the utensil bucket **120** may be separated from the other storage system components and may be utilized as a storage bucket within a user's home or kitchen. In one configuration, the tray, may be separated from the other storage system components and may be utilized as a storage tray within a user's home or kitchen. In one configuration, the tray **110** may be utilized in conjunction with solely the bucket, while the knife block **140** is placed in a drawer. In one configuration, the tray **110** may be placed with the knife block **140** and the utensil bucket **120** may be placed somewhere else within the user's home.

In an embodiment, the tray **110** may be composed of aluminum with a silicone foot (e.g., the aluminum may be powder coated in color). In an embodiment, the utensil bucket **120** may be composed of aluminum with a silicone foot (e.g., the aluminum may be powder coated in color). In an embodiment, the knife block **140** may be composed of wood with a silicone foot. In an embodiment, the utensil block **130** may be composed of wood. In an embodiment, the utensil bucket **120** and/or the tray **110** may be composed of stainless steel (or any other type of metal), MDF with fabric, plastic, silicone, TPR, glass, and/or stone. In an embodiment, the utensil block **130** and/or the knife block **140** may be composed of stainless steel (or any other type of metal), MDF with fabric, and/or plastic. However, any of the aforementioned components may be composed of any suitable combination of materials.

In an embodiment, the utensil bucket **120** and/or the tray **110** may include a colored powder coating on the exterior. The knife block **140** and the utensil block **130** may include a lacquer natural varnish. In various embodiments, based on the substrate material, any surface finish, coating, color, texture may be used to change the aesthetic or performance.

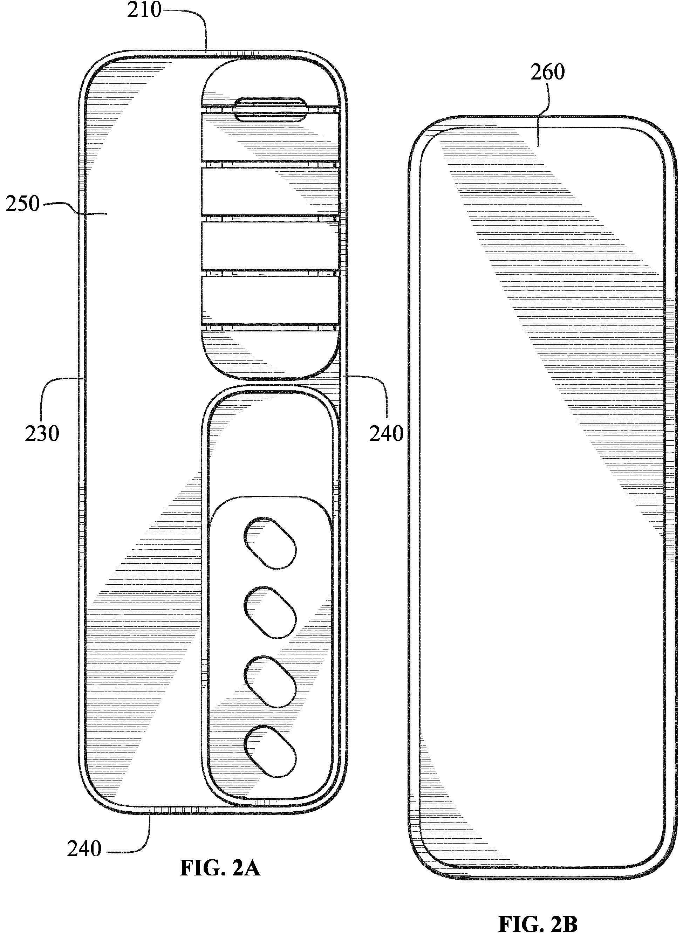

Referring to FIGS. 2A and 2B, the plurality of components comprising the storage system may include the tray **110,** wherein said tray **110** may be comprised of a tray base **150,** a first tray sidewall **230,** a second tray sidewall **240,** a tray front wall **210,** and/or a tray back wall **220.** The tray **110** may be comprised of a tray material, wherein said material may include at least one of ceramic, glass, metal, plastic, and wood. In an embodiment, the tray **110** may be comprised of one or more of the aforementioned tray materials.

In an embodiment, the tray base **150** may be comprised of a tray base top surface **250** and a tray base bottom surface **260.** Moreover, the tray base **150** may be configured into a tray base shape, wherein the tray base shape is at least one of a rectangle, a square, an ellipse, a circle and a chamfered rectangle. However, the tray base shape may be comprised of any suitable shape alternative.

In an embodiment, the tray base top surface **250** may employ one or more magnets. In another embodiment, ferrous material may be disposed within the tray base top surface **250.** Accordingly, other system components (e.g., utensil bucket **120,** utensil block **130,** and knife block **140**) comprising magnetics, metallic material, or magnetic material may be reversibly adhered to the tray base top surface **250.** In an embodiment, the tray **110** includes a carbon steel sheet on the underside (e.g., underneath the silicone foot pad), for example, to allow for the knife block **140** to magnetically attach. As a non-limiting example, the knife block **140** itself may include a plurality of magnets (e.g., N52 magnets) on the bottom, for example, also underneath the silicone foot pad. However, in various embodiments, any suitable magnets may be utilized. As a non-limiting example, carbon steel and 12 N52 magnets may be used between the tray **110** and the knife block **140.** Any of the component contemplated herein may be reversibly affixed by any number or type of magnet or metallic component. In another embodiment, any of components (e.g., tray 110, utensil bucket **120,** utensil block **130,** and knife block **140**) may be reversibly affixed with any suitable fastening mechanisms, including, but not limited to, hook-and-loop fasteners.

The tray front wall **210** may have a tray front wall bottom edge, a tray front wall top edge, a tray front wall inner surface, and/or a tray front wall outer surface. The tray front wall **210** may be disposed on a front edge of the tray base. Moreover, the tray front wall **210** may be disposed between the tray base top surface **250** and the tray base bottom surface **260** along the front edge of the tray base, wherein the disposition of the tray front wall **210** defines a bottom lip of the tray base. In a different embodiment, the tray front wall bottom edge is configured to be flush with the tray base bottom surface **260.** In a further embodiment, the tray front wall bottom edge is configured to be flush with the tray base top surface **250.** In yet a further embodiment, a tray front wall width, extending along a first axis, may exceed a tray front wall length, extending along a second axis. Furthermore, the tray front wall length may exceed the tray front wall width.

The tray front wall bottom edge may be disposed between the tray front wall inner surface and the tray front wall outer surface. In another embodiment, the tray front wall top edge may be disposed between the tray front wall inner surface and the tray front wall outer surface. In a further embodiment, the tray front wall top edge may be disposed between a tray front wall inner surface top edge and a tray front wall outer surface top edge, and the tray front wall bottom edge may be disposed between a tray front wall inner surface bottom edge and a tray front wall outer surface bottom edge.

The tray back wall **220** may have a tray back wall bottom edge, a tray back wall top edge, a tray back wall inner surface, and/or a tray back wall outer surface. The tray back wall **220** may be disposed on a back edge of the tray base. Said tray back wall **220** may be disposed between the tray base top surface **250** and the tray base bottom surface **260** on the back edge of the tray base, wherein the disposition of the tray back wall **220** further defines the bottom lip of the tray base. In another embodiment, the tray back wall bottom edge is configured to be flush with the tray base bottom surface **260.** In an embodiment, the tray back wall bottom edge is configured to be flush with the tray base top surface **250.** In a different embodiment, a tray back wall width, extending along the first axis, may exceed a tray back wall length, extending along the second axis. Furthermore, the tray back wall length may exceed the tray back wall width.

The tray back wall bottom edge may be disposed between the tray back wall inner surface and the tray back wall outer surface. In another embodiment, the tray back wall top edge may be disposed between the tray back wall inner surface and the tray back wall outer surface. In a different embodiment, the tray back wall top edge may be disposed between a tray back wall inner surface top edge and a tray back wall outer surface top edge, and the tray back wall bottom edge may be disposed between a tray back wall inner surface bottom edge and a tray back wall outer surface bottom edge.

The first tray sidewall **230** may have a first tray sidewall bottom edge, a first tray sidewall top edge, a first tray sidewall inner surface, and/or a first tray sidewall outer surface. The first tray sidewall **230** may be disposed between the tray front wall **210** and the tray back wall **220** along a first edge of the tray base. Furthermore, the first tray sidewall **230** may be disposed between the tray base top surface **250** and the tray base bottom surface **260** along said first side edge of the tray base, wherein the disposition of the first tray sidewall **230** further defines the bottom lip of the tray base. In an embodiment, the first tray sidewall **230** is positioned such that the first tray sidewall bottom edge is flush with the tray base bottom surface **260.** In another embodiment, the first tray sidewall **230** is positioned such that the first tray sidewall bottom edge is flush with the tray base top surface **250.** In a further embodiment, a first tray sidewall width, extending along the first axis, may exceed a first tray sidewall length, extending along the second axis. Additionally, the first tray sidewall length may exceed the first tray sidewall width.

The first tray sidewall bottom edge may be disposed between the first tray sidewall inner surface and the first tray sidewall outer surface. In another embodiment, the first tray sidewall top edge may be disposed between the first tray sidewall inner surface and the first tray sidewall outer surface. In a further embodiment, the first tray sidewall top edge may be disposed between a first tray sidewall inner surface top edge and a first tray sidewall outer surface top edge, and the first tray sidewall bottom edge may be disposed between a first tray sidewall inner surface bottom edge and a first tray sidewall outer surface bottom edge.

The second tray sidewall **240** may have a second tray sidewall bottom edge, a second tray sidewall top edge, a second tray sidewall inner surface, and/or a second tray sidewall outer surface. The second tray sidewall **240** may be disposed between the tray front wall **210** and the tray back wall **220** along a second edge of the tray base. Additionally, the second tray sidewall **240** may be disposed between the tray base top surface **250** and the tray base bottom surface **260** along the second edge of the tray base, wherein the disposition of the second tray sidewall **240** further defines the bottom lip of the tray base. In a further embodiment, the second tray sidewall **240** is positioned such that the second tray sidewall bottom edge is flush with the tray base bottom surface **260.** In another embodiment, the second tray sidewall **240** is positioned such that the second tray sidewall bottom edge is flush with the tray base top surface **250.** In an embodiment, a second tray sidewall width, extending along the first axis, may exceed a second tray sidewall length, extending along the second axis. Moreover, the second tray sidewall length may exceed the second tray sidewall width.

The second tray sidewall bottom edge may be disposed between the second tray sidewall inner surface and the second tray sidewall outer surface. In another embodiment, the second tray sidewall top edge may be disposed between the second tray sidewall inner surface and the second tray sidewall outer surface. In a further embodiment, the second tray sidewall top edge may be disposed between a second tray sidewall inner surface top edge and a second tray sidewall outer surface top edge, and the second tray sidewall bottom edge may be disposed between a second tray sidewall inner surface bottom edge and a second tray sidewall outer surface bottom edge.

The first tray sidewall **230,** the second tray sidewall **240,** the tray front wall **210,** and the tray back wall **220** may define a congruous tray rim. In an embodiment, the first tray sidewall inner surface, the second tray sidewall inner surface, the tray front wall inner surface, and the tray back wall inner surface may define a congruous tray rim inner surface. In another embodiment, a tray storage area may be defined by the congruous tray rim inner surface and the tray base top surface **250.** The congruous tray rim may comprise a height suitable to prevent any of the system components (e.g., tray **110,** utensil bucket **120,** utensil block **130,** and knife block **140**) from inadvertently slipping from the tray storage area. Accordingly, the congruous tray rim may be of a height sufficient to contain such components during regular use yet allow such components to be easily removed from the tray by a user.

The tray storage area may be configured to house at least one of the utensil bucket **120,** the utensil block, and the knife block **140.** In another embodiment, the tray storage area may be configured to house at least one culinary implement. In a further embodiment, the tray storage area may be configured to house a combination of the utensil bucket **120,** the utensil block, the knife block **140,** and the at least one culinary implement. In an embodiment, the tray **110** includes a foot disposed on the tray base bottom surface **260.** The foot may traverse the entirety of the tray base bottom surface **260.** However, in another embodiment, the foot may traverse a portion of the tray base bottom surface **260,** such that a perimeter of the tray base bottom surface **260** may be exposed, as shown in FIG. 2B. Accordingly, in such an embodiment, the foot may promote adherence of the tray **110** to its receiving surface, while being generally invisible to an outside viewpoint. The foot may be of a rubber material or any other material suitable to promote reversible adherence between the tray **110** and a receiving surface.

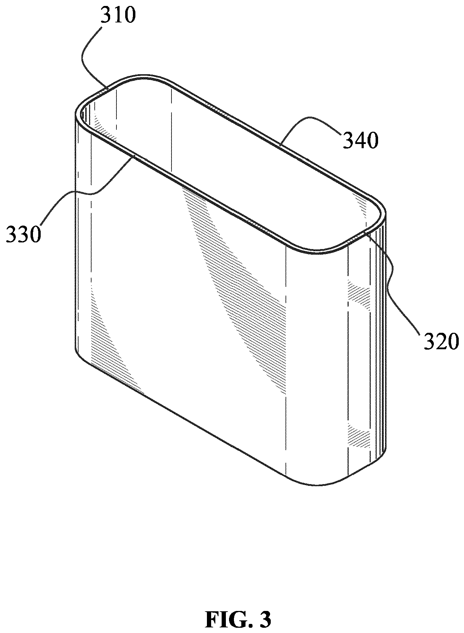

Referring to FIG. 3, the plurality of components, comprising the storage system, may further include the utensil bucket **120.** Said utensil bucket **120** may be comprised of a bucket base, a bucket front wall **310,** a bucket back wall **320,** a first bucket sidewall **330,** and/or a second bucket sidewall **340.** The bucket front wall **310,** the bucket back wall **320,** the first bucket sidewall **330,** and/or the second bucket sidewall **340** may form a bucket sidewall. In an embodiment, the bucket base may be comprised of a bucket base top surface and a bucket base bottom surface. The utensil bucket **120** may be comprised of a bucket material, wherein said material may include at least one of ceramic, glass, metal, plastic, and wood. In an embodiment, the utensil bucket **120** may be comprised of one or more of the aforementioned bucket materials.

In an embodiment, the bucket base top surface may employ one or more magnets. In another embodiment, ferrous material may be disposed within the bucket base top surface. In a further embodiment, the bucket base bottom surface may employ one or more magnets, such that the bucket base bottom is able to reversibly adhere to the tray base top surface **250.** In yet a further embodiment, ferrous material may be disposed within the bucket base bottom surface, such that the bucket base bottom surface is able to reversibly adhere to the tray base top surface **250.** Accordingly, the bucket base top surface and/or the bucket base bottom surface may include magnetic or metallic material, allowing magnetic adherence of the bucket **120** to the tray **110** and/or the utensil block **130.**

The bucket front wall **310** may have a bucket front wall bottom edge, a bucket front wall top edge, a bucket front wall inner surface, and/or a bucket front wall outer surface. The bucket front wall **310** may be disposed on a front edge of the bucket base. Moreover, the bucket front wall **310** may be disposed between the bucket base top surface and the bucket base bottom surface along the front edge of the bucket base, wherein the disposition of the bucket front wall **310** defines a bottom lip of the bucket base. In a different embodiment, the bucket front wall bottom edge is configured to be flush with the bucket base bottom surface. In a further embodiment, the bucket front wall bottom edge is configured to be flush with the bucket base top surface. In yet a further embodiment, a bucket front wall width, extending along the first axis, may exceed a bucket front wall length, extending along the second axis. Furthermore, the bucket front wall length may exceed the bucket front wall width.

The bucket front wall bottom edge may be disposed between the bucket front wall inner surface and the bucket front wall outer surface. In another embodiment, the bucket front wall top edge may be disposed between the bucket front wall inner surface and the bucket front wall outer surface. In a further embodiment, the bucket front wall top edge may be disposed between a bucket front wall inner surface top edge and a bucket front wall outer surface top edge, and the bucket front wall bottom edge may be disposed between a bucket front wall inner surface bottom edge and a bucket front wall outer surface bottom edge.

The bucket back wall **320** may have a bucket back wall bottom edge, a bucket back wall top edge, a bucket back wall inner surface, and/or a bucket back wall outer surface. The bucket back wall **320** may be disposed on a back edge of the bucket base. Said bucket back wall **320** may be disposed between the bucket base top surface and the bucket base bottom surface on the back edge of the bucket base, wherein the disposition of the bucket back wall **320** further defines the bottom lip of the bucket base. In another embodiment, the bucket back wall bottom edge is configured to be flush with the bucket base bottom surface. In an embodiment, the bucket back wall bottom edge is configured to be flush with the bucket base top surface. In a different embodiment, a bucket back wall width, extending along the first axis, may exceed a bucket back wall length, extending along the second axis. Furthermore, the bucket back wall length may exceed the bucket back wall width.

The bucket back wall bottom edge may be disposed between the bucket back wall inner surface and the bucket back wall outer surface. In another embodiment, the bucket back wall top edge may be disposed between the bucket back wall inner surface and the bucket back wall outer surface. In a further embodiment, the bucket back wall top edge may be disposed between a bucket back wall inner surface top edge and a bucket back wall outer surface top edge, and the bucket back wall bottom edge may be disposed between a bucket back wall inner surface bottom edge and a bucket back wall outer surface bottom edge.

The first bucket sidewall **330** may have a first bucket sidewall bottom edge, a first bucket sidewall top edge, a first bucket sidewall inner surface, and/or a first bucket sidewall outer surface. The first bucket sidewall **330** may be disposed between the bucket front wall **310** and the bucket back wall **320** along a first edge of the bucket base. Furthermore, the first bucket sidewall **330** may be disposed between the bucket base top surface and the bucket base bottom surface along said first edge of the bucket base, wherein the disposition of the first bucket sidewall **330** further defines the bottom lip of the bucket base. In an embodiment, the first bucket sidewall **330** is positioned such that the first bucket sidewall bottom edge is flush with the bucket base bottom surface. In another embodiment, the first bucket sidewall **330** is positioned such that the first bucket sidewall bottom edge is flush with the bucket base top surface. In a further embodiment, a first bucket sidewall width, extending along the first axis may, exceed a first bucket sidewall length, extending along the second axis. Additionally, the first bucket sidewall length may exceed the first bucket sidewall width.

The first bucket sidewall bottom edge may be disposed between the first bucket sidewall inner surface and the first bucket sidewall outer surface. In another embodiment, the first bucket sidewall top edge may be disposed between the first bucket sidewall inner surface and the first bucket sidewall outer surface. In a further embodiment, the first bucket sidewall top edge may be disposed between a first bucket sidewall inner surface top edge and a first bucket sidewall outer surface top edge, and the first bucket sidewall bottom edge may be disposed between a first bucket sidewall inner surface bottom edge and a first bucket sidewall outer surface bottom edge.

The second bucket sidewall **340** may have a second bucket sidewall bottom edge, a second bucket sidewall top edge, a second bucket sidewall inner surface, and/or a second bucket sidewall outer surface. The second bucket sidewall **340** may be disposed between the bucket front wall **310** and the bucket back wall **320** along a second edge of the bucket base. Additionally, the second bucket sidewall **340** may be disposed between the bucket base top surface and the bucket base bottom surface along the second edge of the bucket base, wherein the disposition of the second bucket sidewall **340** further defines the bottom lip of the bucket base. In a further embodiment, the second bucket sidewall **340** is positioned such that the second bucket sidewall bottom edge is flush with the bucket base bottom surface. In another embodiment, the second bucket sidewall **340** is positioned such that the second bucket sidewall bottom edge is flush with the bucket base top surface. In an embodiment, a second bucket sidewall width, extending along the first axis, may exceed a second bucket sidewall length, extending along the second axis. Moreover, the second bucket sidewall length may exceed the second bucket sidewall width.

The second bucket sidewall bottom edge and/or the second bucket sidewall top edge may be disposed between the second bucket sidewall inner surface and the second bucket sidewall outer surface. In a further embodiment, the second bucket sidewall top edge may be disposed between a second bucket sidewall inner surface top edge and a second bucket sidewall outer surface top edge, and the second bucket sidewall bottom edge may be disposed between a second bucket sidewall inner surface bottom edge and a second bucket sidewall outer surface bottom edge.

The first bucket sidewall **330,** the second bucket sidewall **340,** the bucket front wall **310,** and the bucket back wall **320** may define a uniform bucket sidewall. In an embodiment, the first bucket sidewall inner surface, the second bucket sidewall inner surface, the bucket front wall inner surface, and the bucket back wall inner surface may define a uniform bucket sidewall inner surface. In another embodiment, a bucket storage area may be defined by the uniform bucket sidewall inner surface and the bucket base top surface.

The bucket storage area may be configured to house at least one the utensil block **130.** In another embodiment, the bucket **120** may be configured to accept the utensil block **130** and/or the knife block **140.** In another embodiment, the bucket storage area may be configured to house the at least one culinary implement. In a further embodiment, the bucket storage area may be configured to house a combination of the tray, the utensil block **130,** the knife block **140,** and/or the at least one culinary implement. In an embodiment, the bucket **120** includes a foot disposed on the bottom surface of the bucket. The foot may traverse the entirety of the bottom surface of the bucket. However, in another embodiment, the foot may traverse a portion of the bottom surface of the bucket **120,** such that a perimeter of the bottom surface of the bucket **120** may be exposed. Accordingly, in such an embodiment, the foot may promote adherence of the bucket **120** to its receiving surface, such as the tray **110.** The foot may be of a rubber material or any other material suitable to promote reversible adherence between the bucket **120** and a receiving surface. In another embodiment, the bottom surface of the bucket **120** may be smooth, composed of a frictionless material, and/or coated with a frictionless material, such that the bucket **120** may slide along the tray base top surface **250.**

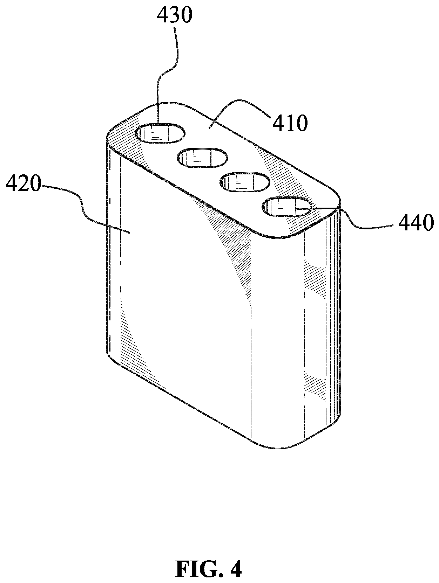

Referring to FIG. 4, the plurality of components, comprising the storage system, may further include the utensil block **130,** wherein the utensil block **130** may be comprised of a utensil block top surface **410,** a utensil block bottom surface, and/or a utensil block encasing **420.** The utensil block **130** may be comprised of a utensil block material, wherein said material may include at least one of ceramic, glass, metal, plastic, and wood. In an embodiment, the utensil block **130** may be comprised of one or more of the aforementioned utensil block materials.

In an embodiment, the utensil block top surface **410** and/or the utensil block bottom surface may employ one or more magnets, such that said surfaces are able to reversibly adhere to at least one of the utensil bucket top surface and the tray base top surface **250.** In an embodiment, ferrous material may be disposed within the utensil block top surface **410** and/or the utensil block bottom surface, such that said surfaces are able to reversibly adhere to at least one of the utensil bucket top surface and the tray base top surface **250.**

The utensil block top surface **410** may be configured into a utensil block top surface shape, wherein the utensil block top surface shape is at least one of a rectangle, a square, an ellipse, a circle, and a chamfered rectangle. However, the utensil block top surface shape may be comprised of any suitable shape alternative. In an embodiment, the utensil block top surface **410** may be placed into the bucket storage area and/or the tray storage area.

The utensil block top surface **410** may include a plurality of utensil block top surface apertures **430.** The plurality of utensil block top surface apertures **430** may be configured into a utensil block top surface aperture shape, wherein said shape may be comprised of at least one of a rectangle, a square, an ellipse, a circle, and a chamfered rectangle. The one or more apertures **430** may be configured to accept one or more utensils.

The utensil block bottom surface may be configured into a utensil block bottom surface shape, wherein the utensil block bottom surface shape is at least one of a rectangle, a square, an ellipse, a circle, and a chamfered rectangle. However, the utensil block bottom surface shape may be comprised of any suitable shape alternative. In an embodiment, the utensil block bottom surface may be placed into the bucket storage area and/or the tray storage area.

The utensil block bottom surface may include a plurality of utensil block bottom surface apertures (not shown). The plurality of utensil block bottom surface apertures may be configured into a utensil block bottom surface aperture shape, wherein said shape may be comprised of at least one of a rectangle, a square, an ellipse, a circle, and a chamfered rectangle. In an embodiment, the bottom surface apertures may be in fluid communication with the top surface apertures **430,** such that water or other debris may enter the top surface aperture **430** and exit the bottom surface apertures. Accordingly, the bottom surface apertures may prevent mold or other buildup within the utensil block **130.** In an embodiment where the utensil block **130** is accepted by the bucket **120,** the bucket **120** may collect water or debris that has traversed the top surface apertures **430** to the bottom surface apertures. Accordingly, a user may simply empty the water or debris from the bucket **120.**

In an embodiment, the utensil block top surface shape may differ from the utensil block bottom surface shape. In another embodiment, the utensil block top surface shape may be the same as the utensil block bottom surface shape.

The utensil block encasing **420** may be disposed between the utensil block top surface **410** and the utensil block bottom surface. In an embodiment, the utensil block encasing **420** includes a plurality of utensil block storage compartments **440.** The plurality of utensil block storage compartments **440** may be disposed within a utensil block encasing interior portion. Furthermore, the plurality of utensil block storage compartments **440** may be perpendicular to the utensil block top surface **410** and/or the utensil block bottom surface. In another embodiment, the plurality of utensil block storage compartments **440** may not be perpendicular to the utensil block top surface **410** and/or the utensil block bottom surface.

In an embodiment, the plurality of utensil block storage compartments **440** may connect to the plurality of utensil block top surface apertures **430.** In the aforementioned embodiment, a portion of the at least one culinary implement may be received by the plurality of utensil block top surface apertures **430,** allowing for the portion of the at least one culinary implement to be housed in the plurality of utensil block storage compartments. In a further embodiment, the plurality of utensil block storage compartments **440** may connect to the plurality of utensil block bottom surface apertures. In the same embodiment, the portion of the at least one culinary implement may be received by the plurality of utensil block bottom surface apertures, allowing for the portion of the at least one culinary implement to be housed in the plurality of utensil block storage compartments. In yet a further embodiment, the plurality of utensil block storage compartments **440** may connect the plurality of utensil block top surface apertures **430** to the plurality of utensil block bottom surface apertures, wherein the connection of the utensil block top surface apertures **430** to the utensil block bottom surface apertures via the utensil block storage compartments **440** form a unified hollow tube. In the above embodiment, the portion of the at least one culinary implement may be received by the utensil block top surface apertures **430** and/or the utensil block bottom surface apertures, allowing for the portion of the at least one culinary implement to be housed within the unified hollow tube.

In an embodiment, the utensil block top surface apertures **430** and accompanying compartments may be oblong, such that the utensil block top surface apertures **430** and accompanying compartments **440** are sized to accept the handle portions of cooking implements. As shown in FIG. 4, each of the utensil block top surface apertures **430** and accompanying compartments **440** are equally spaced apart. The utensil block top surface apertures **430** and accompanying compartments **440** may be disposed or offset at roughly 45 degrees to the axis of any one of the walls of the utensil block **130.** Accordingly, the offset utensil block top surface apertures **430** and accompanying compartments **440** may provide adequate real estate above the utensil block **130** for the distal portions of utensils, such that the distal portions of the utensils do not interfere with adjacent utensils.

The utensil block **130** or components thereof (e.g., the utensil block encasing **420**) may shaped and/or sized accordingly to the inner surface of the bucket **120,** such that the utensil block **130** may interface with at least one of the walls of the bucket **120.** In an embodiment, the utensil block **130** and the bucket **120** may be configured such that up to three of the sidewalls of the utensil block **130** may interface with the bucket **120,** as shown in FIG. 2A. As non-limiting examples, the utensil block **130** may interface with: (1) the bucket front wall **310,** the bucket back wall **320,** and the first bucket sidewall **330;** (2) the bucket front wall **310** and the bucket back wall **320;** and/or (3) the bucket front wall **310,** the bucket back wall **320,** and the second bucket sidewall **340.** Accordingly, the utensil block **130** may be slid within the bucket **120** to convert the utensil block **130** between any of the aforementioned configurations. In any of the aforementioned embodiments, one or more utensils or other objects may be disposed in the space formed between the bucket **120** and the utensil block **130.**

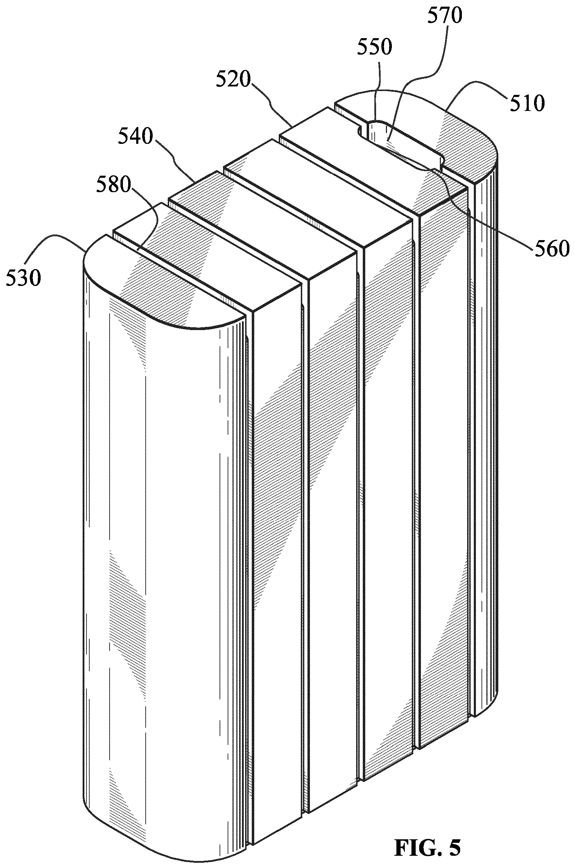

Referring to FIG. 5, the plurality of components, comprising the storage system, may further include the knife block **140,** wherein the knife block **140** may be comprised of a first front end member **510,** a second front end member **520,** a back-end member **530,** a plurality of elongated members **540,** and a plurality of dividers. The knife block **140** may be comprised of a knife block material, wherein said material may include at least one of ceramic, glass, metal, plastic, and wood. In an embodiment, the knife block **140** may be comprised of one or more of the aforementioned knife block materials.

The first front end member **510** may be comprised of a first front end member top surface, a first front end member bottom surface, a first front end member outer wall, and/or a first front end member inner wall.

The first front end member top surface may be configured into a first front end member top surface shape, wherein the shape is at least one of a rectangle, a square, a half ellipse, a half circle, a trapezoid, and half of a chamfered rectangle. However, the first front end member top surface shape may be comprised of any suitable shape alternative.

The first front end member bottom surface may be configured into a first front end member bottom surface shape, wherein the shape is at least one of a rectangle, a square, a half ellipse, a half circle, a trapezoid, and half of a chamfered rectangle. However, the first front end member bottom surface shape may be comprised of any suitable shape alternative.

In an embodiment, the first front end member top surface shape and the first front end member bottom surface shape may be the same. In another embodiment, the first front end member top surface shape and the first front end member bottom surface shape may be different.

The first front end member top surface may further comprise a first front end member top surface notch **550.** In an embodiment, the first front end member top surface notch **550** is disposed on a top edge of the first front end member inner wall. In another embodiment, the first front end member top surface notch **550** may extend down a portion of the first front end member inner wall defining a first front end member indentation, wherein the indentation is perpendicular to the first front end member top surface. Additionally, the first front end member indentation may not be perpendicular to the first front end member top surface.

The second front end member **520** may be comprised of a second front end member top surface, a second front end member bottom surface, a second front end member first inner wall, a second front end member second inner wall, a second front end member first outer wall, and/or a second front end member second outer wall.

The second front end member top surface may be configured into a second front end member top surface shape, wherein the shape is at least one of a chamfered rectangle, a rectangle, and a square. However, the second front end member top surface shape may be comprised of any suitable shape alternative.

The second front end member bottom surface may be configured into a second front end member bottom surface shape, wherein the shape is at least one of a chamfered rectangle, a rectangle, and a square. However, the second front end member bottom surface shape may be comprised of any suitable shape alternative.

In an embodiment, the second front end member top surface shape and the second front end member bottom surface shape may be the same. In another embodiment, the second front end member top surface shape and the second front end member bottom surface shape may differ.

The second front end member top surface may further comprise a second front end member top surface notch **560.** In an embodiment, the second front end member top surface notch **560** is disposed on a top edge of the second front end member first inner wall. In a different embodiment, the second front end member top surface notch **560** may be disposed on a top edge of the second front end member second inner wall. In a further embodiment, the second front end member top surface notch **560** may extend down a portion of the second front end member first inner wall and/or the second front end member second inner wall defining a second front end member indentation, wherein the indentation is perpendicular to the second front end member top surface. Moreover, the second front end member indentation may not be perpendicular to the second front end member top surface.

The first front end member top surface notch **550** and the second front end member top surface notch **560** may define a front-end aperture **570.** In an embodiment, the front-end aperture **570** may be capable of receiving at least one culinary implement.

The first front end member indentation and the second front end member indentation may define a front-end member receptacle, wherein said receptacle may be capable of housing the at least one culinary implement.

The back-end member **530** may be comprised of a back-end member top surface, a back-end member bottom surface, a back-end member outer wall, and/or a back-end member inner wall.

The back-end member top surface may be configured into a back-end member top surface shape, wherein the shape is at least one of a rectangle, a square, a half ellipse, a half circle, a trapezoid, and half of a chamfered rectangle. However, the back-end member top surface shape may be comprised of any suitable shape alternative.

The back-end member bottom surface may be configured into a back-end member bottom surface shape, wherein the shape is at least one of a rectangle, a square, a half ellipse, a half circle, a trapezoid, and half of a chamfered rectangle. However, the back-end member bottom surface shape may be comprised of any suitable shape alternative.

In an embodiment, the back-end member top surface shape and the back-end member bottom surface shape may be the same. In another embodiment, the back-end member top surface shape and the back-end member bottom surface shape may differ.

The plurality of elongated members **540** may be comprised of an elongated member top surface, an elongated member bottom surface, an elongated member first inner wall, an elongated member second inner wall, an elongated member first outer wall, and/or an elongated member second outer wall.

The elongated member top surface may be configured into an elongated member top surface shape, wherein the shape is at least one of a rectangle, a square, and a chamfered rectangle. However, the elongated member top surface shape may be comprised of any suitable shape alternative.

The elongated member bottom surface may be configured into an elongated member bottom surface shape, wherein the shape is at least one of a rectangle, a square, and a chamfered rectangle. However, the elongated member bottom surface shape may be comprised of any suitable shape alternative.

In an embodiment, the elongated member top surface shape and the elongated member bottom surface shape may be the same. In another embodiment, the elongated member top surface shape and the elongated member bottom surface shape may be different.

The first front end member bottom surface, the second front end member bottom surface, the back end member bottom surface, and the elongated member bottom surface may form a knife block bottom surface. In an embodiment, the knife block bottom surface may employ one or magnets, such that the knife block bottom surface is able to reversibly adhere to at least one of the utensil bucket top surface and the tray base top surface **250.** In a further embodiment, ferrous material may be disposed within the knife block bottom surface, such that said surface is able to reversibly adhere to at least one of the utensil bucket top surface and the tray base top surface **250.**

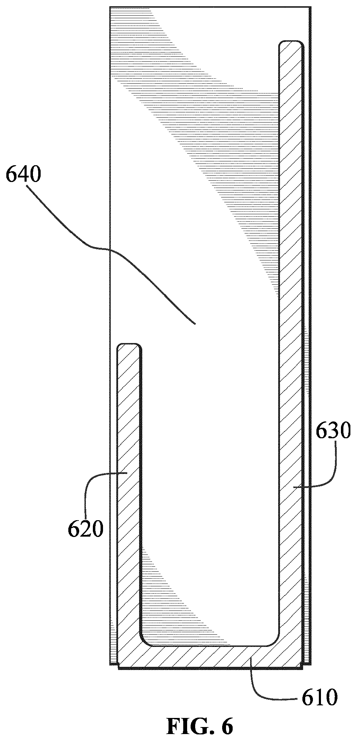

Referring to FIG. 6, the plurality of dividers may be comprised of a divider base **610,** a divider front wall **620,** and/or a divider back wall **630.** In an embodiment the plurality of dividers may be disposed on the first front end member inner wall, the second front end member first inner wall, the second front end member second inner wall, the elongated member first inner wall, the elongated member second inner wall, and/or the back-end member inner wall (hereinafter collectively referred to as the "inner walls").

In an embodiment, the plurality of dividers may attach the first front end member **510** to the second front end member **520.** In another embodiment, the plurality of dividers may attach to the plurality of elongated members **540.** In a different embodiment, the plurality of dividers may attach the back-end member **530** to the plurality of elongated members **540.** In a further embodiment, the plurality of dividers may attach the back-end member **530** to at least one of the first front end member **510** and the second front end member **520.** In yet a further embodiment, the plurality of dividers may employ any combination of the aforementioned embodiments.

The divider base **610** may be comprised of a divider base inner edge and/or a divider base outer edge. In an embodiment, the divider base **610,** having a divider base length, may be disposed along a bottom edge of the inner walls. In an embodiment, the divider base length may be equal to a length of the bottom edge of the inner walls. In another embodiment, the divider base length may be less than the length of the bottom edge of the inner walls. The divider base outer edge may be arranged such that said outer edge is flush with the bottom edge of the inner walls. In a different embodiment, the divider base outer edge may be arranged such that said outer edge is not flush with the bottom edge of the inner walls.

The divider front wall **620** may be comprised of a divider front wall inner edge and/or a divider front wall outer edge. Said divider front wall **620** may be disposed on a first outer edge or a second outer edge of the inner walls. The divider front wall **620** may have a divider front wall length. In an embodiment, the divider front wall length is equal to a length of the first outer edge or the second outer edge of the inner walls. In another embodiment, the divider front wall length is less than the length of the first outer edge or the second outer edge of the inner walls. The divider front wall outer edge may be arranged such that the divider front wall outer edge may be flush the first outer edge or the second outer edge of the inner walls. In yet a further embodiment, the divider front wall outer edge may not be flush with the first outer edge or the second outer edge of the inner walls.

The divider back wall **630** may be comprised of a divider back wall inner edge and/or a divider back wall outer edge. The divider back wall **630** may be disposed on the first outer edge or the second outer edge of the inner walls. The divider back wall **630** may have a divider back wall length. In an embodiment, the divider back wall length is equal to the length of the first outer edge or the second outer edge of the inner walls. In another embodiment, the divider back wall length is less than the length the first outer edge or the second outer edge of the inner walls. The divider back wall outer edge may be arranged such that said outer edge is flush with the first outer edge or the second outer edge of the inner walls. In a further embodiment, the divider back wall outer edge is not flush with the first outer edge or the second outer edge of the inner walls.

In an embodiment, the divider front wall length may equal the divider back wall length. In a further embodiment, the divider front wall length may exceed the divider back wall length. In yet a further embodiment, the divider back wall length may exceed the divider front wall length. In another embodiment, the divider front wall length may be between one-quarter and three-quarters of the divider back wall length. In a different embodiment, the divider back wall length may be between one-quarter and three-quarters of the divider front wall length.

In an embodiment, the knife block **140** is further comprised of a plurality of knife block compartments **640.** In an embodiment, the divider base inner edge, the divider front wall inner edge, the divider back wall inner edge, and at least two of the inner walls define the plurality of knife block compartments **640.** Moreover, the plurality of knife block compartments **640** may be further defined by a space created between the inner walls resulting from the disposition of the plurality of dividers between said walls. The plurality of knife block compartments **640** may be configured to house the at least one culinary implement. In another embodiment, the plurality of knife block compartments **640** may be further comprised of at least one knife block compartment opening **580,** wherein said opening **580** is defined by the space between a top edge of the inner walls. Furthermore, said opening **580** may be configured to receive the at least one culinary implement. In a different embodiment, the at least one knife block compartment opening **580** may be further defined by the divider front wall **620,** wherein the divider front wall length is less than the length of the first outer edge or the second outer edge of the inner walls. Additionally, the at least one knife block compartment opening **580** may be configured to receive a cutting portion of a knife, such that the cutting portion is housed in at least one of the plurality of knife block compartments **640.** Moreover, said housing of the cutting portion may leave enough real estate above the knife block **140** for a knife handle, such that said handles do not interfere with one another when housed in the plurality of knife block compartments **640.**

In an embodiment, the divider front wall **620** may be shorter than the divider back wall **630** such that a knife may be retrieved from the knife block compartment **640** with ease. As a non-limiting example, the divider front wall **620** may face a user, wherein the user may extract a knife from the knife block compartment **640,** and wherein the height of the divider front wall **620** permits the knife to pivot toward the user as the knife exits the knife block compartment **640.** In a further embodiment, magnets may be disposed in the knife block compartment **640,** the divider front wall **620,** the divider back wall **630,** the divider base **610,** and/or any suitable component adjacent to the knife block compartment **640.** Such magnets may reversibly adhere the incident knife to the knife block compartment **640.**

The at least one culinary implement may include at least one of a boning knife, a chef's knife, a cleaver, a filet knife, a paring knife, a santoku knife, a serrated knife, one or more wooden spoons, a whisk, a tongs, a spatula, a ladle, a pizza cutter, a peeler, a potato masher, a can opener, an ice cream spoon, a pasta spoon, and/or a pair of shears.

Finally, other implementations of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

Various elements, which are described herein in the context of one or more embodiments, may be provided separately or in any suitable subcombination. Further, the processes described herein are not limited to the specific embodiments described. For example, the processes described herein are not limited to the specific processing order described herein and, rather, process blocks may be re-ordered, combined, removed, or performed in parallel or in serial, as necessary, to achieve the results set forth herein.

It will be further understood that various changes in the details, materials, and arrangements of the parts that have been described and illustrated herein may be made by those skilled in the art without departing from the scope of the following claims.

## Claims

1. A modular culinary storage system comprising:
a tray (110);
a utensil bucket (120);
a utensil block comprising (130):
a utensil block top surface (410) comprising a plurality of utensil block top surface apertures (430), and
a plurality of utensil block storage compartments (440), each of the plurality of utensil block storage compartments (440) bound by at least one of the plurality of utensil block top surface apertures (430); and
a knife block (140) comprising:
a first front end member (510) comprising a first front end member top surface notch (550);
a second front end member (520), comprising a second front end member top surface notch (560),
the first front end member top surface notch (550) and the second front end member top surface notch (560) defining a front end aperture (570);
a plurality of elongated members (540);
a back-end member (530); and
a plurality of dividers disposed between at least one of the first front end member (510), the second front end member (520), the plurality of elongated members (540), and the back-end member (530);
the tray (110), configured to house at least one of the utensil bucket (120), the utensil block (130), and the knife block (140); and
the utensil bucket (120), configured to house at least one of the utensil block (130) and the knife block (140).

2. The modular culinary storage system of claim 1, wherein the tray (110) further comprises one or more magnetic tray members.

3. The modular culinary storage system of claim 1 or claim 2, wherein the utensil bucket (120) further comprises one or more magnetic utensil bucket members.

4. The modular culinary storage system of any preceding claim, wherein the utensil block (130) further comprises one or more magnetic utensil block members.

5. The modular culinary storage system of any preceding claim, wherein the knife block (140) further comprises one or more magnetic knife block members.

6. The modular culinary storage system of any preceding claim, wherein each of the plurality of dividers comprise:
a divider base (610);
a divider front wall (620) orthogonal to the divider base (610); and
a divider back wall (630) orthogonal to the divider base (610).

7. The modular culinary storage system of claim 6, wherein the divider front wall (620) is shorter than the divider back wall (630).

8. The modular culinary storage system of any preceding claim, the utensil block (130) further comprising a plurality of utensil block storage compartments (440), each of the plurality of utensil block storage compartments (440) bound by one of a utensil block bottom surface apertures and one of the utensil block top surface apertures (430).

9. The modular culinary storage system of any preceding claim, wherein the tray (110) further comprises a foot not traversing an entirety of the tray (110).

10. The modular culinary storage system of any preceding claim, wherein the plurality of dividers define a plurality of knife block compartments (640).

11. The modular culinary storage system of claim 10, wherein each of the plurality of knife block compartments (640) further comprises at least one knife block compartment opening (580), wherein each of the at least one knife block compartment openings (580) is of a lesser area than the front end aperture (570).

12. The modular culinary storage system of any preceding claim, wherein the utensil bucket (120) is sized to accept the utensil block (130), and wherein the utensil block (130) is configurable in a plurality of configurations within the utensil bucket (120).

13. The modular culinary storage system of claim 12, wherein the plurality of configurations comprises a first configuration and a second configuration, wherein the utensil bucket (120) comprises a bucket front wall (310), a bucket back wall (320), a bucket first wall (330), and a bucket second wall (340), wherein, in the first configuration, the utensil block (130) interfaces only with the bucket front wall (310), the bucket back wall (320), and the bucket first wall (330), and wherein, in the second configuration, the utensil block (130) interfaces only with the bucket front wall (310), the bucket back wall (320), and the bucket second wall (340).

14. The modular culinary storage system of claim 13, wherein the plurality of configurations further comprises a third configuration, and wherein, in the third configuration, the utensil block (130) interfaces only with the bucket front wall (310) and the bucket back wall (320).

15. The modular culinary storage system of any preceding claim, wherein each of the plurality of utensil block top surface apertures (430) is oblong, wherein the utensil bucket (120) comprises a utensil bucket sidewall, and wherein each of the plurality of utensil block top surface apertures (430) are disposed nonorthogonal to the utensil bucket sidewall.

16. The modular culinary storage system of claim 15, wherein the utensil block (130) comprises a utensil block side wall, and wherein the utensil bucket sidewall and the utensil block sidewall comprise complementary curvature.

## Patentansprüche

1. Modulares Küchenlagerungssystem, umfassend:
eine Schale (110);
einen Utensilienbehälter (120);
einen Utensilienblock, umfassend (130):
eine obere Oberfläche (410) des Utensilienblocks, umfassend eine Vielzahl von oberen Oberflächenöffnungen (430) des Utensilienblocks, und
eine Vielzahl von Lagerfächern (440) des Utensilienblocks, wobei jedes der Vielzahl von Lagerfächern (440) des Utensilienblocks durch mindestens eine der Vielzahl von oberen Oberflächenöffnungen (430) des Utensilienblocks gebunden ist; und
einen Messerblock (140), umfassend:
ein erstes vorderes Endelement (510), das eine erste obere Oberflächenkerbe (550) des ersten vorderen Endelements umfasst;
ein zweites vorderes Endelement (520), das eine zweite obere Oberflächenkerbe (560) des zweiten vorderen Endelements umfasst,
wobei die erste obere Oberflächenkerbe (550) des ersten vorderen Endelements und die zweite obere Oberflächenkerbe (560) des ersten vorderen Endelements eine Öffnung (570) des vorderen Endes definieren;
eine Vielzahl von länglichen Elementen (540);
ein rückseitiges Endelement (530); und
eine Vielzahl von Trennwänden, die zwischen mindestens einem von dem ersten vorderen Endelement (510), dem zweiten vorderen Endelement (520), der Vielzahl von länglichen Elementen (540) und dem rückseitigen Endelement (530) angeordnet sind;
wobei die Schale (110) ausgebildet ist, um mindestens einen von dem Utensilienbehälter (120), dem Utensilienblock (130) und dem Messerblock (140) aufzunehmen; und
wobei der Utensilienbehälter (120) ausgebildet ist, um mindestens einen von dem Utensilienblock (130) und dem Messerblock (140) aufzunehmen.

2. Modulares Küchenlagerungssystem nach Anspruch 1, wobei die Schale (110) weiter ein oder mehrere magnetische Schalenelemente umfasst.

3. Modulares Küchenlagerungssystem nach Anspruch 1 oder Anspruch 2, wobei der Utensilienbehälter (120) weiter ein oder mehrere magnetische Utensilienbehälterelemente umfasst.

4. Modulares Küchenlagerungssystem nach einem vorstehenden Anspruch, wobei der Utensilienblock (130) weiter ein oder mehrere magnetische Utensilienblockelemente umfasst.

5. Modulares Küchenlagerungssystem nach einem vorstehenden Anspruch, wobei der Messerblock (140) weiter ein oder mehrere magnetische Messerblockelemente umfasst.

6. Modulares Küchenlagerungssystem nach einem vorstehenden Anspruch, wobei jede der Vielzahl von Trennwänden umfasst:
einen Trennsockel (610);
eine vordere Trennwand (620) orthogonal zum Trennsockel (610); und
eine rückseitige Trennwand (630) orthogonal zum Trennsockel (610).

7. Modulares Küchenlagerungssystem nach Anspruch 6, wobei die vordere Trennwand (620) kürzer als die rückseitige Trennwand (630) ist.

8. Modulares Küchenlagerungssystem nach einem vorstehenden Anspruch, wobei der Utensilienblock (130) weiter eine Vielzahl von Lagerfächern (440) des Utensilienblocks umfasst, wobei jedes der Vielzahl von Lagerfächern (440) des Utensilienblocks durch eine von den unteren Oberflächenöffnungen des Utensilienblocks und eine von den oberen Oberflächenöffnungen (430) des Utensilienblocks gebunden ist.

9. Modulares Küchenlagerungssystem nach einem vorstehenden Anspruch, wobei die Schale (110) weiter einen Fuß umfasst, der nicht die Gesamtheit der Schale (110) durchquert.

10. Modulares Küchenlagerungssystem nach einem vorstehenden Anspruch, wobei die Vielzahl von Trennwänden eine Vielzahl von Messerblockfächern (640) definieren.

11. Modulares Küchenlagerungssystem nach Anspruch 10, wobei jedes der Vielzahl von Messerblockfächern (640) weiter mindestens eine Messerblock-Fachöffnung (580) umfasst, wobei jede der mindestens einen Messerblock-Fachöffnungen (580) eine kleinere Fläche aufweist, als die Öffnung (570) des vorderen Endes.

12. Modulares Küchenlagerungssystem nach einem vorstehenden Anspruch, wobei der Utensilienbehälter (120) bemessen ist, um den Utensilienblock (130) unterzubringen, und wobei der Utensilienblock (130) in einer Vielzahl von Konfigurationen innerhalb des Utensilienbehälters (120) konfigurierbar ist.

13. Modulares Küchenlagerungssystem nach Anspruch 12, wobei die Vielzahl von Konfigurationen eine erste Konfiguration und eine zweite Konfiguration umfasst, wobei der Utensilienbehälter (120) eine vordere Behälterwand (310), eine rückseitige Behälterwand (320), eine erste Behälterwand (330) und eine zweite Behälterwand (340) umfasst, wobei, der Utensilienblock (130) in der ersten Konfiguration nur eine Schnittstelle mit der vorderen Behälterwand (310), der rückseitigen Behälterwand (320) und der ersten Behälterwand (330) bildet, und wobei der Utensilienblock (130) in der zweiten Konfiguration nur eine Schnittstelle mit der vorderen Behälterwand (310), der rückseitigen Behälterwand (320) und der zweiten Behälterwand (340) bildet.

14. Modulares Küchenlagerungssystem nach Anspruch 13, wobei die Vielzahl von Konfigurationen weiter eine dritte Konfiguration umfasst, und wobei der Utensilienblock (130) in der dritten Konfiguration nur eine Schnittstelle mit der vorderen Behälterwand (310) und der rückseitigen Behälterwand (320) bildet.

15. Modulares Küchenlagerungssystem nach einem vorstehenden Anspruch, wobei jede der Vielzahl von oberen Oberflächenöffnungen (430) des Utensilienblocks langgestreckt ist, wobei der Utensilienbehälter (120) eine Utensilienbehälter-Seitenwand umfasst, und wobei jede der Vielzahl von oberen Oberflächenöffnungen (430) des Utensilienblocks nicht orthogonal zur Utensilienbehälter-Seitenwand angeordnet ist.

16. Modulares Küchenlagerungssystem nach Anspruch 15, wobei der Utensilienblock (130) eine Utensilienblock-Seitenwand umfasst, und wobei die Utensilienbehälter-Seitenwand und die Utensilienblock-Seitenwand eine sich ergänzende Krümmung umfassen.

## Revendications

1. Système modulaire de stockage culinaire comprenant :
un plateau (110) ;
un bac à ustensiles (120) ;
un bloc à ustensiles (130) comprenant :
une surface supérieure du bloc à ustensiles (410) comprenant une pluralité d'ouvertures de surface supérieure du bloc à ustensiles (430), et
une pluralité de compartiments de stockage du bloc à ustensiles (440), chacun de la pluralité de compartiments de stockage du bloc à ustensiles (440) étant délimité par au moins une de la pluralité des ouvertures de surface supérieure du bloc à ustensiles (430) ; et
un bloc à couteaux (140) comprenant :
un premier élément d'extrémité avant (510) comprenant une encoche de surface supérieure du premier élément d'extrémité avant (550) ;
un deuxième élément d'extrémité avant (520), comprenant une encoche de surface supérieure du deuxième élément d'extrémité avant (560),
l'encoche de surface supérieure du premier élément d'extrémité avant (550) et l'encoche de surface supérieure du deuxième élément d'extrémité avant (560) définissant une ouverture d'extrémité avant (570) ;
une pluralité d'éléments allongés (540) ;
un élément d'extrémité arrière (530) ; et
une pluralité de séparateurs disposés entre au moins un parmi le premier élément d'extrémité avant (510), le deuxième élément d'extrémité avant (520), la pluralité d'éléments allongés (540), et l'élément d'extrémité arrière (530) ;
le plateau (110), configuré pour recevoir au moins un parmi le bac à ustensiles (120), le bloc à ustensiles (130), et le bloc à couteaux (140) ; et
le bac à ustensiles (120), configuré pour recevoir au moins un parmi le bloc à ustensiles (130) et le bloc à couteaux (140).

2. Système modulaire de stockage culinaire selon la revendication 1, dans lequel le plateau (110) comprend en outre un ou plusieurs éléments magnétiques du plateau.

3. Système modulaire de stockage culinaire selon la revendication 1 ou la revendication 2, dans lequel le bac à ustensiles (120) comprend en outre un ou plusieurs éléments magnétiques du bac à ustensiles.

4. Système modulaire de stockage culinaire selon l'une quelconque des revendications précédentes, dans lequel le bloc à ustensiles (130) comprend en outre un ou plusieurs éléments magnétiques du bloc à ustensiles.

5. Système modulaire de stockage culinaire selon l'une quelconque des revendications précédentes, dans lequel le bloc à couteaux (140) comprend en outre un ou plusieurs éléments magnétiques de bloc à couteaux.

6. Système modulaire de stockage culinaire selon l'une quelconque des revendications précédentes, dans lequel chacun de la pluralité de séparateurs comprend :
une base du séparateur (610) ;
une paroi avant du séparateur (620) orthogonale à la base du séparateur (610) ;
et
une paroi arrière du séparateur (630) orthogonale à la base du séparateur (610).

7. Système modulaire de stockage culinaire selon la revendication 6, dans lequel la paroi avant du séparateur (620) est plus courte que la paroi arrière du séparateur (630).

8. Système modulaire de stockage culinaire selon l'une quelconque des revendications précédentes, le bloc à ustensiles (130) comprenant en outre une pluralité de compartiments de stockage du bloc à ustensiles (440), chacun de la pluralité de compartiments de stockage du bloc à ustensiles (440) étant délimité par l'une des ouvertures de surface inférieure du bloc à ustensiles et l'une des ouvertures de surface supérieure du bloc à ustensiles (430).

9. Système modulaire de stockage culinaire selon l'une quelconque des revendications précédentes, dans lequel le plateau (110) comprend en outre un pied ne traversant pas une totalité du plateau (110).

10. Système modulaire de stockage culinaire selon l'une quelconque des revendications précédentes, dans lequel la pluralité de séparateurs définit une pluralité de compartiments de bloc à couteaux (640).

11. Système modulaire de stockage culinaire selon la revendication 10, dans lequel chacun de la pluralité de compartiments de bloc à couteaux (640) comprend en outre au moins une ouverture de compartiment de bloc à couteaux (580), dans lequel chacune de l'au moins une ouverture de compartiment de bloc à couteaux (580) présente une surface inférieure à celle de l'ouverture d'extrémité avant (570).

12. Système modulaire de stockage culinaire selon l'une quelconque des revendications précédentes, dans lequel le bac à ustensiles (120) est dimensionné pour recevoir le bloc à ustensiles (130), et dans lequel le bloc à ustensiles (130) est configurable dans une pluralité de configurations à l'intérieur du bac à ustensiles (120).

13. Système modulaire de stockage culinaire selon la revendication 12, dans lequel la pluralité de configurations comprend une première configuration et une deuxième configuration, dans lequel le bac à ustensiles (120) comprend une paroi avant du bac (310), une paroi arrière du bac (320), une première paroi du bac (330), et une deuxième paroi du bac (340), dans lequel, dans la première configuration, le bloc à ustensiles (130) vient uniquement en contact avec la paroi avant du bac (310), la paroi arrière du bac (320), et la première paroi du bac (330), et dans lequel, dans la deuxième configuration, le bloc à ustensiles (130) vient uniquement en contact avec la paroi avant du bac (310), la paroi arrière du bac (320), et la deuxième paroi du bac (340).

14. Système modulaire de stockage culinaire selon la revendication 13, dans lequel la pluralité de configurations comprend en outre une troisième configuration, et dans lequel, dans la troisième configuration, le bloc à ustensiles (130) vient uniquement en contact avec la paroi avant du bac (310) et la paroi arrière du bac (320).

15. Système modulaire de stockage culinaire selon l'une quelconque des revendications précédentes, dans lequel chacune de la pluralité d'ouvertures de surface supérieure du bloc à ustensiles (430) est oblongue, dans lequel le bac à ustensiles (120) comprend une paroi latérale du bac à ustensiles, et dans lequel chacune de la pluralité d'ouvertures de surface supérieure du bloc à ustensiles (430) est disposée de manière non orthogonale à la paroi latérale du bac à ustensiles.

16. Système modulaire de stockage culinaire selon la revendication 15, dans lequel le bloc à ustensiles (130) comprend une paroi latérale du bloc à ustensiles, et dans lequel la paroi latérale du bac à ustensiles et la paroi latérale du bloc à ustensiles comprennent une courbure complémentaire.
